Europäisches Patentamt

European Patent Office

Office européen des brevets

(11) Publication number: **0 300 468 B1**

(12) **EUROPEAN PATENT SPECIFICATION**

(45) Date of publication of patent specification: **23.09.92**   (51) Int. Cl.5: **B60H 1/00**, G05D 23/19

(21) Application number: **88111716.2**

(22) Date of filing: **20.07.88**

(54) **Automotive air conditioning system.**

(30) Priority: **20.07.87 JP 110012/87 U**

(43) Date of publication of application:
**25.01.89 Bulletin  89/04**

(45) Publication of the grant of the patent:
**23.09.92 Bulletin  92/39**

(84) Designated Contracting States:
**DE FR GB IT SE**

(56) References cited:
**US-A- 3 644 811**

**PATENT ABSTRACTS OF JAPAN, vol. 7, no. 9
(M-185)[1154], 14th January 1983; & JP-A-57
167 817 (NIPPON DENSO K.K.) 15-10-1982**

**PATENT ABSTRACTS OF JAPAN, vol. 7, no.
199 (M-240)[1344], 3rd September 1983; & JP-
A-58 97 514 (DIESEL KIKI K.K.) 10-06-1983**

**PATENT ABSTRACTS OF JAPAN, vol. 7, no.
261 (M-257)[1406], 19th November 1983; &
JP-A-58 141 915 (DIESEL KIKI K.K.) 23-08-1983**

(73) Proprietor: **SANDEN CORPORATION
20 Kotobuki-cho
Isesaki-shi Gunma, 372(JP)**

(72) Inventor: **Akabane, Hidemitsu
880 Kami-Namie-cho
Takasaki-shi Gunma 370(JP)**
Inventor: **Isobe, Toshimi
2263-2 Toyoshiro-cho
Isesaki-Shi Gunma 372(JP)**
Inventor: **Hoshino, Seiichi
113-1 Kizaki Nitta-machi
Nitta-gun Gunma 370-03(JP)**

(74) Representative: **Prüfer, Lutz H., Dipl.-Phys.
Harthauser Strasse 25d
W-8000 München 90(DE)**

Rank Xerox (UK) Business Services

## Description

This invention relates to an automotive air conditioning system, and more particularly, to an automotive air conditioning system which controls the temperature of the air flowing out to a compartment in accordance with the angular position of an air mix damper driven by a motor actuator.

A conventional automotive air conditioning system including an automatic air temperature control function is provided with a control circuit. The control circuit computes the desired opening angle of an air mix damper in accordance with a predetermined temperature, the outside air temperature and the inside air temperature etc., and drives the air mix damper to the desired opening angle by means of a drive device, e.g., a motor actuator, thereby controlling the temperature of the air flowing out.

In the above automotive air conditioning system, if the air mix damper is locked by a foreign matter, or if the speed reduction gear is locked for some reason, the motor actuator is locked. If things come to the worst, the motor is destroyed, and may cause a fire.

In order to prevent the above problem, JP-A-58-97 514 discloses to measure the load current of the motor and to reverse its direction if an output voltage is exceeding a reference voltage.

JP-A-57-167 817 dislcoses a system as indicated in the preamble of claim 1, having a maximum position detecting device to prevent locking of the device at these positions.

However, if the air mix damper and the motor actuator are connected by rods or links, even though the air mix damper is completely closed or opened, the motor actuator may not be driven up to the upper or lower limit of the rotational angle of the motor. In this case, the motor is locked, and the lock detecting function in the control circuit determines that the compressor is locked, but the control circuit does not provide an output signal for driving the motor actuator. Accordingly, even though the air mix damper or the gear is not locked, the motor actuator cannot be controlled.

It is an object of this invention to provide an automotive air conditioning system which can suitably control the temperature of the air flowing out to a compartment and which positively stops and reverses the motor direction when the device is locked by a foreign matter.

An automotive air conditioning system according to the present invention is indicated in claim 1.

Further features and other aspects of this invention will be understood from the detailed description of the preferred embodiment of this invention.

Figure 1 is a schematic view of an automotive air conditioning system in accordance with one embodiment of this invention.

Figure 2 is a flow chart for describing operation of the automotive air conditioning system as shown in Figure 1.

Figure 3 is an explanatory view of an actual angle and a desired angle of a rotatable angle of a motor.

Figure 4 is a flow chart for describing lock release of a motor.

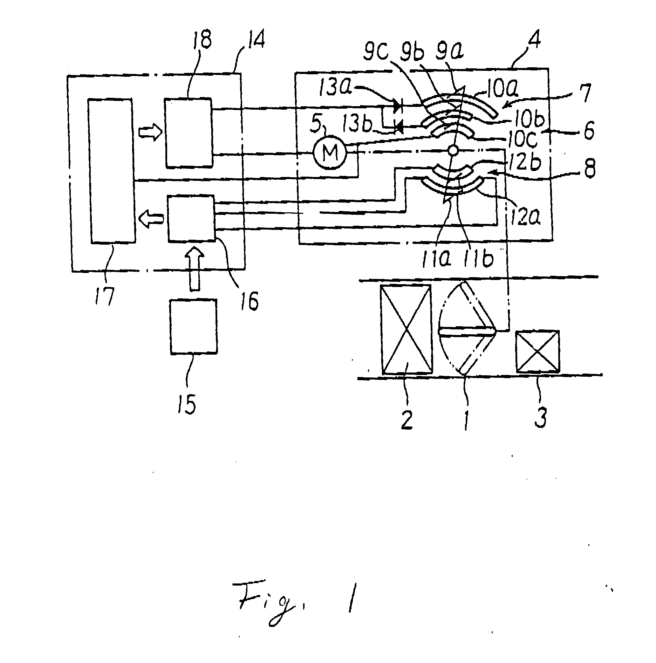

With reference to Figure 1, a schematic view of an air conditioning system which includes an automatic control mechanism is shown.

Air mix damper 1 is disposed backward of evaporator 2 and controls the volume of the air which is flown to heater core 3, whereby the temperature of the air flowing out is controlled. Motor actuator 4 is connected to air mix damper 1 through a wire or link to vary an angular position of air mix damper 1.

Motor actuator 4 comprises motor 5 and rotation control switch 6 to control rotation of motor 5. Rotation control switch 6 includes regulating portion 7 to regulate upper and lower limitations of the angle of rotation of motor 5 and position detecting portion 8 to detect an actual rotational angle thereof.

Regulating portion 7 includes movable contact points 9a, 9b and 9c which are rotationally driven in accordance with rotation of motor 5, and fixed contact points 10a, 10b and 10c to contact movable contact points 9a, 9b and 9c. Fixed contact points 10a, 10b and 10c are made in the form of an arc and the upper and lower limitations of the rotatable angle of motor 5 are determined by the connection between fixed contact points 10a and 10b, and movable contact points 9a and 9b. Fixed contact points 10a and 10b are coupled with motor actuator control circuit 14 through diodes 13a and 13b each of which has a different polarity. Fixed contact point 10c is coupled with motor actuator control circuit 14 through motor 5.

Position detecting portion 8 comprises movable contact points 11a and 11b which are rotationally driven in accordacne with rotation of motor 5, and fixed contact points 12a and 12b to contact movable contact points 11a and 11b. Since fixed contact point 12 is formed of resistant substance, rotation of motor 5 is detected by position detecting portion 8 as variation of the resistant value, and the rotational angle of motor 5 is then feedbacked to motor actuator control circuit 14.

Motor actuator control circuit 14 which includes A/D converter 16, micro-computer 17 and motor actuator 18 is a control drive circuit device for automatically controlling air temperature and controls operation of motor actuator 4 in accordance with a prescribed control program. The signals from sensors 15, e.g., an inside temperature sensor, an outside temperature sensor, an evaporator temperature sensor, a thermosensor for water in heater core 3, an insulation sensor and a temperature predetermined device, and rotation detecting portion 8 are input to micro-computer 17 which includes a control program through A/D converter 16 and then sent to motor actuator 4 through motor actuator drive circuit 18.

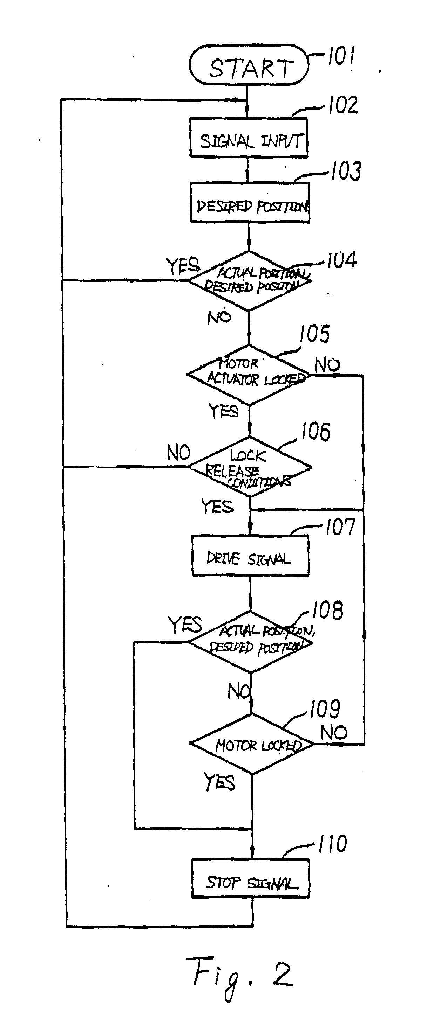

With reference to Figure 2, a flow chart for describing operation of the above construction is shown.

When the air conditioning system is turned on at step 101, signals from each sensor 15 are input at step 102. Control passes to step 103 and desired position of motor actuator 4 is computed in accordance with the detected signals. In step 104, the actual position and desired position of motor actuator 4 are compared to each other. If the actual position is equal to the desired position, control returns to step 102. Otherwise, control passes to step 105. In step 105, it is determined whether or not motor actuator 4 is locked. If motor actuator 4 is not locked, control passes to step 107. A drive signal is sent to motor actuator 4 in step 107 and motor 5 starts to rotate. Motor actuator 4 continuously moves since the drive signal is sent thereto, and the actual position is compared with the desired position in step 108. If the actual position is equal to the desired position, control passes to step 110, and motor actuator 4 is stopped. Contrarily, while the actual position is not equal to the desired position, control passes to step 109. In step 109, it is determined whether or not motor 5 is locked. If motor 5 is locked, a signal passes to step 110, and motor actuator 4 is stopped. Otherwise, control returns to step 107.

In step 105, if motor actuator 4 is locked, a control passes to step 106. It is determined in step 106 whether or not conditions of lock release are satisfied.

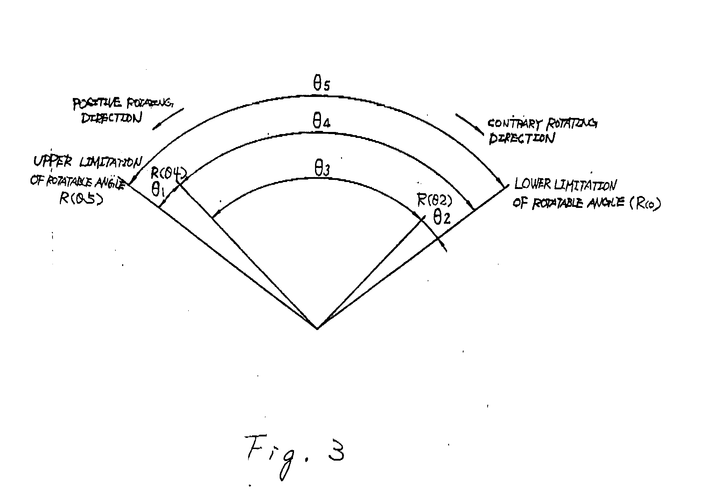

With reference to Figure 3, an explanatory view of lock release is shown. $\theta 5$ indicates whole rotatable angle which is the range between the upper and lower limitations of rotatable angle, of motor actuator 4. $\theta 1$ and $\theta 2$ indicate predetermined angles each of which is close to the upper and lower limitations of rotatable angle of motor actuator 4, respectively. In step 110, motor actuator 4 is stopped and a control returns to step 106. In step 106, if motor actuator 4 is driven toward the upper or lower limitations of rotatable angle of motor actuator 4 and locked within range of angle $\theta 1$ or $\theta 2$, and a drive signal for rotation in a direction opposite to the rotational direction of motor actuator 4 is input, when motor 5 is locked, and the lock of motor 5 is released, and control passes to step to rotate motor 5 in the contrary direction.

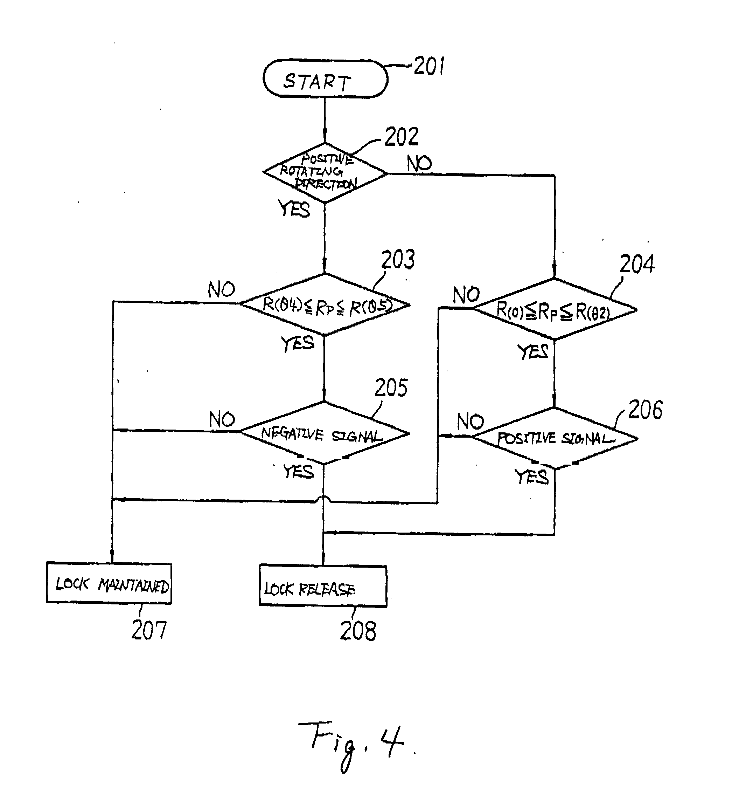

With reference to Figure 4, a flow chart of lock release is shown. When a signal is input to step 201, the determination of lock release is started. In step 202, it is determined whether or not motor actuator 4 is locked in the positive rotating direction. If motor actuator 4 is locked in the positive rotating direction, control passes to step 203. In step 203, it is determined whether or not the actual position of motor actuator 4 is positioned to be over angle $\theta 4$ and below angle $\theta 5$, i.e., within the range of predetermined angle $\theta 1$. If the actual position is not within the above range, control passes to step 207, and the lock of motor actuator 4 is maintained. Otherwise, control passes to step 205. In step 205, it is determined whether or not a negative signal is input. If the negative signal is not input, control passes to step 207, and the lock of motor actuator 4 is maintained. Otherwise, control passes to step 208, and the lock of motor actuator 4 is released.

In step 202, if motor actuator 4 is not locked in the positive rotating direction, control passes to step 204. In step 204, it is determined whether or not the actual position of motor actuator 4 is positioned to be over the lower limitation of the rotation angle of motor actuator 4 and below predetermined angle $\theta 2$. If the actual position is not within the above range, control passes to step 207, and the lock of motor actuator 4 is maintained. Otherwise, control passes to step 206. In step 206, it is determined whether or not a positive signal is input. If the positive signal is not input, control passes to step 207, and the lock of motor actuator 4 is maintained. Otherwise, control passes to step 208, and the lock of motor actuator 4 is released.

As mentioned above, it is determined whether or not the conditions of lock release are satisfied in step 106. If the above conditions are not satisfied, control returns to step 102, and a control restarts. Otherwise, control passes to step 107, and motor actuator 4 is rotated in the contrary direction.

## Claims

1. An automotive air conditioning system including an air mix damper (1) for controlling the temperature of the air flowing out, a motor (5) driving the air mix damper (1), a motor actuator (4) including a rotation control switch (6) provided with a regulating portion (7) for regulating predetermined upper and lower limitations of the rotation angle of the motor (5), and a position detecting portion (8) for detecting the actual rotation angle of the motor (5), and a control circuit (14) driving the motor actuator (4) in accordance with a plurality of detected signals, e.g., an inside or an outside temperature signal, characterized by determination means (104) for determining if the actual rotation angle of said motor (5) corresponds to the rotation angle determined by said control circuit (14); and

control means (18) for outputting a drive signal in the opposite direction of the instant rotating direction of said motor (5), in case said motor (5) is locked, i.e. said angles do not correspond.

2. The automotive air conditioning system of claim 1, wherein said control circuit (14) comprises an A/D converter (16) and a microcomputer (17).

**Patentansprüche**

1. Fahrzeugklimaanlage mit einem Luftmischungsdämpfer (1) zum Steuern der herausströmenden Luft, einem den Luftmischungsdämpfer (1) antreibenden Motor (5), einem Motorstellorgan (4) mit einem Drehsteuerschalter (6), der mit einem Regelabschnitt (7) zum Regeln einer oberen und unteren Grenze des Drehwinkels des Motors (5) versehen ist, und einem Positionserfassungsabschnitt (8) zum Erfassen des tatsächlichen Drehwinkels des Motors (5) und einer Steuerschaltung (14), die das Motorstellorgan (4) gemäß einer Mehrzahl von erfaßten Signalen, z. B. eines Innentemperatur- und eines Außentemperatursignales treibt, gekennzeichnet durch eine Bestimmungseinrichtung (104) zum Feststellen, ob der tatsächliche Drehwinkel des Motors (5) den durch die Steuerschaltung (14) bestimmten Drehwinkel entspricht; und eine Steuereinrichtung (18) zum Ausgeben eines Antriebsignales in die entgegengesetzte Richtung der gegenwärtigen Drehrichtung des Motors (5) für den Fall, daß der Motor (5) blockiert ist, d. h., das die Winkel sich nicht entsprechen.

2. Fahrzeugklimaanlage nach Anspruch 1, bei der die Steuerschaltung (14) einen A/D-Wandler (16) und einen Mikrocomputer (17) aufweist.

**Revendications**

1. Système de climatisation d'automobile comprenant un volet de mélange d'air (1) destiné à régler la température de l'air débouchant, un moteur (5) qui commande le volet de mélange d'air (1), un actionneur de moteur (4) comprenant un commutateur de commande de rotation (6) comportant une partie de réglage (7) servant à régler des limites supérieure et inférieure prédéterminées de l'angle de rotation du moteur (5), et une partie (8) de détection de la position destinée à détecter l'angle de rotation réel du moteur (5), et un circuit de commande (14) qui active l'actionneur de moteur (4) en fonction d'une pluralité de signaux détectés, par exemple un signal de température intérieure et extérieure, caractérisé par des moyens de vérification (104) destinés à vérifier si l'angle de rotation réel dudit moteur (5) correspond à l'angle de rotation déterminé par ledit circuit de commande (14) ; et des moyens de commande (18) destinés à émettre un signal d'entraînement dans le sens inverse du sens de rotation instantané dudit moteur (5) dans le cas où le moteur (5) est bloqué, c'est-à-dire si lesdits angles ne correspondent pas.

2. Système de climatisation d'automobile selon la revendication 1, dans lequel ledit circuit de commande (14) comprend un convertisseur A/N (16) et un microordinateur (17).

Fig. 1

START —101

SIGNAL INPUT —102

DESIRED POSITION —103

ACTUAL POSITION/
DESIRED POSITION —104
YES / NO

MOTOR
ACTUATOR LOCKED —105
YES / NO

LOCK
RELEASE
CONDITIONS —106
NO / YES

DRIVE SIGNAL —107

ACTUAL POSITION,
DESIRED POSITION —108
YES / NO

MOTOR LOCKED —109
YES / NO

STOP SIGNAL —110

Fig. 2

Fig. 3

Fig. 4.